# EUROPEAN PATENT SPECIFICATION

(11) **EP 2 075 974 B1**
(45) Date of publication and mention of the grant of the patent: **02.08.2017**
(21) Application number: 07846004.5
(22) Date of filing: 21.12.2007
(51) Int. Cl.: H04L 12/42, H04L 12/66, H04L 12/709

(54) **METHOD AND APPARATUS FOR AGGREGATING PORTS**
VERFAHREN UND VORRICHTUNG ZUM AGGREGIEREN VON ANSCHLÜSSEN
PROCÉDÉ ET APPAREIL D'AGRÉGATION DE PORTS

(30) Priority: 22.12.2006 CN 200610168025
(43) Date of publication of application: 01.07.2009
(73) Proprietor: Huawei Technologies Co., Ltd., Longgang District Shenzhen, Guangdong 518129 (CN)
(72) Inventor: CHEN, Lixia, Shenzhen Guangdong 518129 (CN)
(74) Representative: Thun, Clemens
(86) International application number: PCT/CN2007/003727
(87) International publication number: WO 2008/077313

(56) References cited:
- CN-A- 1 725 761
- CN-A- 1 809 021
- CN-A- 101 018 228
- US-A1- 2003 128 706
- US-A1- 2003 128 706
- US-A1- 2006 039 384

## Description

### Field of the Invention

The present invention relates to network technologies, and in particular, to a method and apparatus for aggregating ports.

### Background of the Invention

Port aggregation is a technology for binding multiple physical ports into a logical port. This technology can process multiple physical connections as a single logical connection, and allow parallel connection and data transmission between two network devices through multiple ports to provide higher bandwidth and larger throughput. Normally, the maximum bandwidth for the connection between two common network devices depends on the connection speed of a medium (taking a 100BAST-TX twisted pair as an example, the connection speed is 200 Mbps). If the port aggregation technology is used to bind four 200 Mbps ports, the connection speed may reach as high as 800 Mbps. This technology increases the bandwidth by binding multiple ports, with additional costs on common Category 5 network cables and occupied ports only. When this technology is used, aggregation ports of devices at both ends should work in the full-duplex state.

Port aggregation may be categorized into manual port aggregation, static port aggregation and dynamic port aggregation. A method for aggregating ports is as follows: Aggregation ports of devices at both ends are configured by a user; the Link Aggregation Control Protocol (LACP) transmits packets between the devices at both ends to communicate, negotiate and report errors and failures; and the LACP determines whether to aggregate or de-aggregate a port.

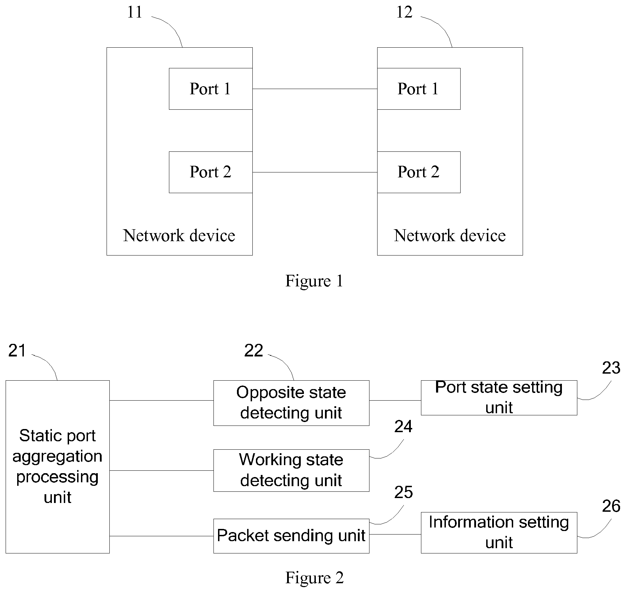

Figure 1 shows the connection diagram of two network devices. The network devices include a network device 11 and a network device 12, where port 1 and port 2 of the network device 11 are connected to port 1 and port 2 of the network device 12 respectively. When static port aggregation is performed, a static link aggregation group (LAG) needs to be configured on the network device 11 and the network device 12.

Currently, static port aggregation may be performed in two modes. One mode is as follows: When a port joins an aggregation group initially, the receiving state machine of the LACP sets the port to the UNSELECTED state; when the port receives packets, the receiving state machine of the LACP sets the port to the SELECTED state or STANDBY state according to the selection logic of the LACP; when the port fails to receive packets within six seconds, the port enters the DEFAULTED timeout state, and the receiving state machine of the LACP sets the port to the UNSELECTED state and notifies the port of not carrying services.

However, through in-depth study and analysis, the inventor finds that the preceding mode has certain weaknesses.

When this mode is used, a static LAG on devices of both ends needs to be configured by the user to use the aggregation function. Because the standard LACP protocol is used, when a static LAG is created by the user, a static LAG or a member port thereof is deleted by the user, service interruption may occur. The duration of service interruption is related to the interval of operations performed by the user on the devices at both ends. The longer the interval is, the longer the duration of service interruption is.

As shown in Figure 1, supposing port 1 of the network device 11 and port 2 of the network device 12 have a service A when a static LAG is created by the user on the network device 11 and the network device 12, if the a static LAG 1 is created by the user on the network device 11, the static LAG 1 includes port 1 and port 2 of the network device 11, and a static LAG 2 is not created on the network device 12. According to the receiving state machine of the LACP, if port 1 and port 2 cannot receive LACP packets from the opposite end, it is assumed that port 1 and port 2 fail, and the service A may be interrupted. The service A may be recovered only after the static LAG 2 is created on the network device 12.

Supposing the static LAG 1 is created on the network device 11, the static LAG 1 includes port 1 and port 2 of the network device 11; supposing the static LAG 2 is created on the network device 12, the static LAG 2 includes port 1 and port 2 of the network device 12, and both the static LAG 1 and the static LAG 2 transmit data services. When the user deletes the static LAG 1, ports of the network device 12 cannot receive packets and fail to work upon expiry of six seconds, and the original services are interrupted. The services may be recovered only after the user deletes the static LAG 2.

Supposing the static LAG 1 is created on the network device 11, the static LAG 1 includes port 1 and port 2 of the network device 11; supposing the static LAG 2 is created on the network device 12, the static LAG 2 includes port 1 and port 2 of the network device 12, and port 1 of the network device 11 and port 1 of the network device 12 have services. When the user deletes port 1 of the network device 11 from the static LAG 1, port 1 of the network device 12 cannot receive packets and fails to work upon expiry of six seconds, and the original services are interrupted. The services may be recovered only after the user deletes port 1 of the network device 12 from the LAG 2.

With increasing requirements of various network applications for the network availability, it is expected by the user that services, especially transmission of voice services, should not be interrupted for a long time. If the service interruption lasts more than 50 ms, applications may fail.

The other static aggregation mode is as follows: When changes happen to a link that participates in the aggregation, other links in the LAG send a packet including the failure information of the link, thus implementing protection. As shown in Figure 1, when port 2 of the network device 11 fails or cannot participate in the aggregation for other reasons, the failure information of port 2 is transmitted to ports of the network device 12 through port 1 of the network device 11.

However, this mode is only applicable to a scenario where devices at both ends have LAGs and changes happen to LAG members.

The related art:
[1]. US 2003/128706 A1 discloses an extension of a Link Aggregation Protocol, LAP, over the network which allows current Ethernet point-to-point LAPs to operate across a Metropolitan Area Network, MAN. A maximum disjoint path algorithm allows a selection of a plurality of alternative end-to-end physical routes between two data terminals. These physical routes share a minimum number of nodes and physical links. End-to-end logical links are then formed by a plurality of successive physical links between nodes containing protocol compatible devices, the physical links being selected based on their physical characteristics such as bandwidth and delay.
[2]. US 2006/039384 A1 discloses various methods and systems for preventing an erroneous link aggregation due to component relocation are disclosed. Such methods include a method for changing the identifier used by a network device and communicating the identifier change to a peer network device without disrupting an aggregated link. In one embodiment, a method involves detecting an identifier change and sending a Port Aggregation Protocol, PAgP, protocol data unit, PDU, that includes a new identifier and information. The information indicates the identifier change. The new identifier identifies a network device subsequent to the identifier change. Another embodiment of a method involves detecting an identifier change and, subsequent to the identifier change, sending a link aggregation protocol PDU that includes an "old device identifier" field dedicated to conveying an old identifier. The old identifier identifies a network device prior to the identifier change.

### Summary of the Invention

An embodiment of the present invention provides a method and apparatus for aggregating ports to overcome the weakness of the prior art that the service interruption lasts a long time due to changes of a link participating in the aggregation.

The technical solution provided in an embodiment of the present invention provides a method for aggregating ports. The method includes: when creating a static link aggregation group, LAG, if determining that a port receives an aggregation packet from an opposite end, which indicates that the static LAG is created at the opposite end, setting the state of the port according to the Link Aggregation Control Protocol, LACP; if determining that no port receives an aggregation packet from the opposite end, which indicates that no static LAG is created at the opposite end, maintaining the state of the port carrying services.

The technical solution provided in an embodiment of the present invention provides an apparatus for aggregating ports. The apparatus includes a static port aggregation processing unit, an opposite state detecting unit, and a port state setting unit. The static port aggregation processing unit is connected to the opposite state detecting unit, and adapted to create a static LAG. The opposite state detecting unit is adapted to detect whether a port receives an aggregation packet from the opposite end when the static LAG is created. If no port receives an aggregation packet from the opposite end, which indicates that no static LAG is created at the opposite end, the state of the port carrying services remains unchanged; otherwise, which indicates that the static LAG is created at the opposite end, the port state setting unit sets the state of the port according to the LACP.

The technical solution provided in an embodiment of the present invention has at least following merits:

The method provided in an embodiment of the present invention detects whether a static LAG is created on the opposite device when creating a static LAG and keeps the original state of the port unchanged after determining that no static LAG is created on the opposite device. Thus, a static LAG can be created without any impact on original services.

### Brief Description of the Drawing

Figure 1 shows the connection diagram of two network devices in the prior art;
Figure 2 shows a structure of an apparatus for aggregating ports in an embodiment of the present invention;
Figure 3 shows the process of creating a static LAG in a first embodiment of the present invention;
Figure 4 shows the process of deleting a static LAG in a second embodiment of the present invention; and
Figure 5 shows the process of deleting a member port in a third embodiment of the present invention.

### Detailed Description of the Invention

The present invention is hereinafter described in detail with reference to the accompanying drawings and preferred embodiments.

Figure 2 shows an apparatus for aggregating ports in an embodiment of the present invention. The apparatus includes: a static port aggregation processing unit 21, an opposite state detecting unit 22, a port state setting unit 23, a working state detecting unit 24, a packet sending unit 25, and an information setting unit 26, where the static port aggregation processing unit 21 is connected to the opposite state detecting unit 22, the working state detecting unit 24 and the packet sending unit 25; the port state setting unit is connected to the opposite state detecting unit 22; and the information setting unit 26 is connected to the packet sending unit 25.

The static port aggregation processing unit 21 is adapted to create a static LAG, delete a static LAG or delete a member port thereof. The opposite state detecting unit 22 is adapted to detect whether a static LAG is created on the opposite device; the detecting process is as follows: The opposite state detecting unit 22 detects whether a port receives an aggregation packet that may be an LACP packet from the opposite end; if an aggregation packet is received by a port, it is indicated that a static LAG is created on the opposite end; otherwise, it is indicated no static LAG is created on the opposite end. If the opposite state detecting unit 22 detects that no port receives an aggregation packet sent from the opposite end, the state of the port carrying services remains unchanged; otherwise, the port state setting unit 23 sets the state of the port according to the LACP. The working state detecting unit 24 is adapted to detect whether a port to be deleted is working. The packet sending unit 25 is adapted to send a packet indicating that the port cannot be aggregated to the opposite end, where the packet is sent from the opposite end or is an LACP packet carrying the port aggregation information. The information setting unit 26 is adapted to set the port aggregation information to FALSE. For example, a Reserved field of the local information in the LACP packet has three bytes, one of which is used by an embodiment of the present invention to store the port aggregation information and control whether the local port can be aggregated; if the byte is set to TRUE, the aggregation is enabled; if the byte is set to FALSE, the aggregation is disabled.

The method for aggregating ports provided in an embodiment of the present invention includes: when creating a static LAG, detecting whether a static LAG is created on the device at the opposite end; if no static LAG is created at the opposite end, maintaining the state of the port carrying services; if a static LAG is created at the opposite end, determining the state of the port according to the LACP. The detecting process is as follows: judging whether a port in the local static LAG receives an aggregation packet from the opposite end, where the aggregation packet may be an LACP packet; if an aggregation packet is received by a port, it is indicated that the static LAG is created at the opposite end; otherwise it is indicated that no static LAG is created at the opposite end. When a static LAG or a member port thereof is deleted, the port sends a packet indicating that the port cannot be aggregated to the opposite end before being deleted so as to speed up changing the state of the opposite port. For ports that formerly carry services, this may speed up changing the state of the opposite end and ensure that the duration of the impact on services is within 50 ms.

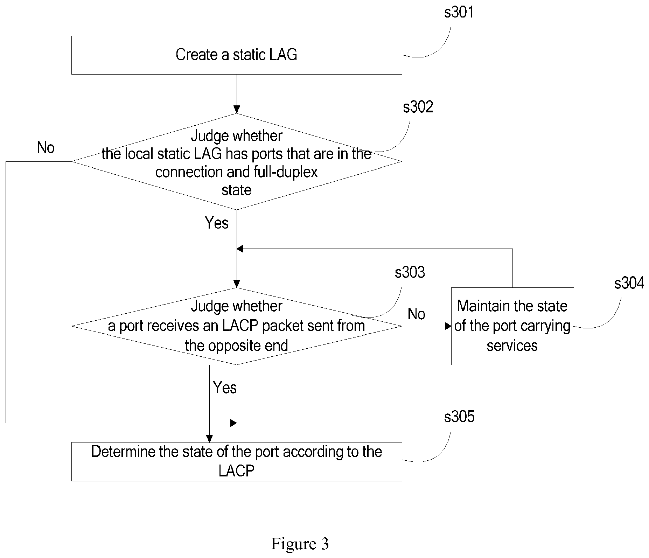

When the connection diagram of network devices shown in Figure 1 and the apparatus for aggregating ports shown in Figure 2 are used, the process of creating a static LAG in the first embodiment is shown in Figure 3. As shown in Figure 3, supposing no static LAG is created on the network device 11 and the network device 12, the first embodiment includes the following steps:
Step s301: The static port aggregation processing unit 21 of the network device 11 creates a static LAG 1. The static LAG 1 includes port 1 and port 2 of the network device 11.
Step s302: The opposite state detecting unit 22 of the network device 11 judges whether the static LAG 1 has ports that are in the connection and full-duplex state. If yes, the process goes to step s303; otherwise, the process skips to step s305. Because port 1 and port 2 of the network device 11 in the first embodiment are in the connection and full-duplex state, the process goes to step s303.
Step s303: The opposite state detecting unit 22 of the network device 11 judges whether a port receives an LACP packet sent from the opposite end. If yes, the process skips to step s305; otherwise, the process goes to step s304. Because no static LAG is created on the network device 12 in the first embodiment, no LACP packet can be sent to the network device 11, and the process goes to step s304.
Step s304: Maintain the state of the port carrying services and go back to step s303.
Step s305: The port state setting unit 23 of the network device 11 determines the state of the port according to the LACP.

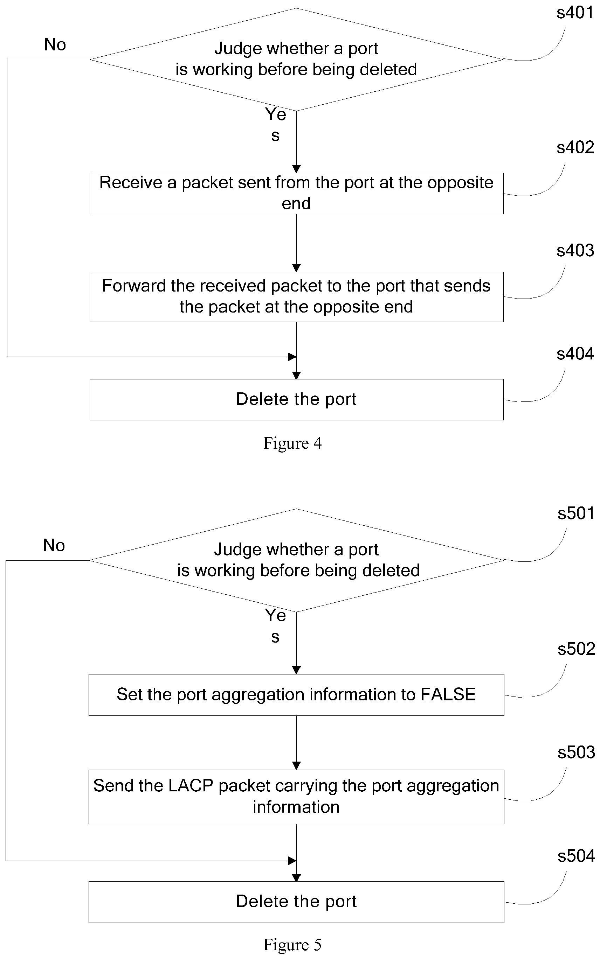

When the connection diagram of network devices shown in Figure 1 and the apparatus for aggregating ports shown in Figure 2 are used, the process of deleting a static LAG in the second embodiment is shown in Figure 4. In the second embodiment, supposing a static LAG 1 is created on the network device 11, the static LAG 1 includes port 1 and port 2 of the network device 11; supposing a static LAG 2 is created on the network device 12, the static LAG 2 includes port 1 and port 2 of the network device 12. As shown in Figure 4, the process of deleting the static LAG 1 in the second embodiment includes the following steps:
Step s401: The working state detecting unit 24 of the network device 11 judges whether port 1 and port 2 of the network device 11 are working. If yes, the process goes to step s402; otherwise, the process skips to step s404. In the second embodiment, port 1 of the network device 11 is working, and port 2 of the network device 11 is idle. Taking the processing on port 1 as an example, because port 1 is working, the process goes to step s402.
Step s402: Port 1 of the network device 11 receives a packet sent from port 1 of the network device 12.
Step s403: The packet sending unit 25 of the network device 11 sends a packet indicating that the port cannot be aggregated to port 1 of the network device 12 through port 1 of the network device 11. The packet indicating that the port cannot be aggregated is the packet sent from port 1 of the network device 12 in step s402. After receiving the packet, port 1 of the network device 12 believes that the received packet is the packet sent from the port of the network device 12, that is, the port is self-looped. Thus, the local port is set to the UNSELECTED state, and cannot carry services.
Step s404: The static port aggregation processing unit 21 of the network device 11 deletes port 1.

After step s401 is complete, because port 2 is idle, the process skips to step s404, that is, the static port aggregation processing unit 21 of the network device deletes port 2 directly. After port 1 and port 2 are deleted, the process of deleting the static LAG 1 ends.

When the connection diagram of network devices shown in Figure 1 and the apparatus for aggregating ports shown in Figure 2 are used, the process of deleting a member port in the third embodiment is shown in Figure 5. In the third embodiment, supposing a static LAG 1 is created on the network device 11, the static LAG 1 includes port 1 and port 2 of the network device 11; supposing a static LAG 2 is created on the network device 12, the static LAG 2 includes port 1 and port 2 of the network device 12. As shown in Figure 5, the process of deleting port 1 of the network device 11 in the third embodiment includes the following steps:
Step s501: The working state detecting unit 24 of the network device 11 judges whether port 1 of the network device 11 is working. If yes, the process goes to step s502; otherwise, the process skips to step s504. Because port 1 of the network device 11 in the third embodiment is working, the process goes to step s502.
Step s502: The information setting unit 26 of the network device 11 sets the port aggregation information to FALSE. An Reserved field of the local information in the LACP packet has three bytes, one of which is used by the third embodiment of the present invention to store the port aggregation information and control whether the local port can be aggregated; if the byte is set to TRUE, the aggregation is enabled; if the byte is set to FALSE, the aggregation is disabled. The information setting unit 26 of the network device 11 in the third embodiment sets the port aggregation information of port 1 to FALSE.
Step s503: The packet sending unit 25 of the network device 11 sends a packet indicating that the port cannot be aggregated to port 1 of the network device 12 through port 1 of the network device 11. The packet indicating that the port cannot be aggregated is the LACP packet carrying the port aggregation information. Because the port aggregation information of the packet is FALSE, after receiving the LACP packet, port 1 of the network device 12 judges that port 1 of the network device 11 cannot be aggregated according to the port aggregation information, and sets its own state to UNSELECTED, that is, port 1 of the network device 12 cannot carry services.
Step s504: The static port aggregation processing unit 21 of the network device 11 deletes port 1.

In step s501, if port 1 of the network device 11 is idle, the process skips to step s504 to delete port 1 directly.

In the third embodiment, before the static LAG or member port is deleted, the port sends a packet indicating the port cannot be aggregated to the opposite end. This method can speed up changing the state of the opposite end and shorten the duration of the impact on services.

Although the invention has been described through exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the claims or their equivalents.

## Claims

1. A method for aggregating ports, comprising:
when creating a static link aggregation group, LAG, if determining that a port receives an aggregation packet from an opposite end, which indicates that the static LAG is created at the opposite end, setting the state of the port according to the Link Aggregation Control Protocol, LACP (305); if determining that no port receives an aggregation packet from the opposite end, which indicates that no static LAG is created at the opposite end, maintaining the state of the port carrying services (304).

2. The method of claim 1, wherein the aggregation packet is an LACP packet.

3. The method of claim 1, further comprising:
when deleting a static LAG or a member port thereof, sending, by a port, a packet indicating that the port cannot be aggregated to the opposite end before being deleted (403, 503); and
setting a port receiving the packet that indicates the port cannot be aggregated at the opposite end as unable to carry services.

4. The method of claim 3, wherein the process of sending the packet indicating that the port cannot be aggregated to the opposite end comprises: sending back the received packet to the port that sends the packet at the opposite end, or sending an LACP packet carrying port aggregation information to a port at the opposite end.

5. The method of claim 3, wherein before sending the packet indicating that the port cannot be aggregated to the opposite end, the method further comprises: when determining that the port is idle before being deleted, deleting the port directly.

6. An apparatus for aggregating ports, comprising:
a static port aggregation processing unit (21), adapted to create a static link aggregation group, LAG;
an opposite state detecting unit (22), adapted to detect whether a port receives an aggregation packet from an opposite end; and
a port state setting unit (23), adapted to: when determining that no port receives an aggregation packet sent from the opposite end, which indicates that no static LAG is created at the opposite end, maintain the state of the port carrying services; when determining that a port receives an aggregation packet sent from the opposite end, which indicates that the static LAG is created at the opposite end, set the state of the port according to the Link Aggregation Control Protocol, LACP.

7. The apparatus of claim 6, wherein the static port aggregation processing unit is further adapted to delete a static LAG or a member port thereof, and the apparatus further comprises:
a packet sending unit (25), adapted to send a packet indicating that a port cannot be aggregated to the opposite end.

8. The apparatus of claim 7, wherein the packet indicating that a port cannot be aggregated is a packet received from the opposite end or an LACP packet carrying port aggregation information.

9. The apparatus of claim 7, further comprising a working state detecting unit (24), wherein:
the working state detecting unit is adapted to detect whether a port is working before being deleted; and
the static port aggregation processing unit is further adapted to delete the port directly when determining that the port is idle before being deleted.

## Patentansprüche

1. Verfahren zum Aggregieren von Anschlüssen, umfassend:
wenn eine statische Verbindungsaggregationsgruppe, LAG, erzeugt wird, falls bestimmt wird, dass ein Anschluss ein Aggregationspaket von einem entgegengesetzten Ende empfängt, was angibt, dass die statische LAG am entgegengesetzten Ende erzeugt wird, Einstellen des Zustands des Anschlusses gemäß dem Verbindungsaggregationssteuerprotokoll, LACP (305); falls bestimmt wird, dass kein Anschluss ein Aggregationspaket vom entgegengesetzten Ende empfängt, was angibt, dass keine statische LAG am entgegengesetzten Ende erzeugt wird, Beibehalten des Zustands des Anschlusses, der Dienste führt (304).

2. Verfahren nach Anspruch 1, wobei das Aggregationspaket ein LACP-Paket ist.

3. Verfahren nach Anspruch 1, ferner umfassend:
wenn eine statische LAG oder ein Elementanschluss von dieser gelöscht wird, Senden, durch einen Anschluss, eines Pakets, das angibt, dass der Anschluss nicht zum entgegengesetzten Ende aggregiert werden kann, bevor er gelöscht wird (403, 503); und
Einstellen eines Anschlusses, der das Paket empfängt, das angibt, dass der Anschluss nicht am entgegengesetzten Ende aggregiert werden kann, als unfähig zum Führen von Diensten.

4. Verfahren nach Anspruch 3, wobei der Prozess des Sendens des Pakets, das angibt, dass der Anschluss nicht zum entgegengesetzten Ende aggregiert werden kann, Zurücksenden des empfangenen Pakets zum Anschluss, der das Paket am entgegengesetzten Ende sendet, oder Senden eines LACP-Pakets, das Anschlussaggregationsinformationen führt, zu einem Anschluss am entgegengesetzten Ende umfasst.

5. Verfahren nach Anspruch 3, wobei vor dem Senden des Pakets, das angibt, dass der Anschluss nicht zum entgegengesetzten Ende aggregiert werden kann, das Verfahren ferner, wenn bestimmt wird, dass der Anschluss inaktiv ist, bevor er gelöscht wird, direktes Löschen des Anschlusses umfasst.

6. Vorrichtung zum Aggregieren von Anschlüssen, umfassend:
eine Statische-Anschlussaggregation-Verarbeitungseinheit (21), die dazu ausgelegt ist, eine statische Verbindungsaggregationsgruppe, LAG, zu erzeugen;
eine Entgegengesetzter-Zustand-Detektionseinheit (22), die dazu ausgelegt ist, zu detektieren, ob ein Anschluss ein Aggregationspaket von einem entgegengesetzten Ende empfängt; und
eine Anschlusszustand-Einstellungseinheit (23), die dazu ausgelegt ist, wenn bestimmt wird, dass kein Anschluss ein Aggregationspaket, das vom entgegengesetzten Ende gesendet wird, empfängt, was angibt, dass keine statische LAG am entgegengesetzten Ende erzeugt wird, den Zustand des Anschlusses, der Dienste führt, beizubehalten; wenn bestimmt wird, dass ein Anschluss ein Aggregationspaket, das vom entgegengesetzten Ende gesendet wird, empfängt, was angibt, dass die statische LAG am entgegengesetzten Ende erzeugt wird, den Zustand des Anschlusses gemäß dem Verbindungsaggregationssteuerprotokoll, LACP, einzustellen.

7. Vorrichtung nach Anspruch 6, wobei die Statische-Anschlussaggregation-Verarbeitungseinheit ferner dazu ausgelegt ist, eine statische LAG oder einen Elementanschluss von dieser zu löschen, und die Vorrichtung ferner Folgendes umfasst:
eine Paketsendeeinheit (25), die dazu ausgelegt ist, ein Paket, das angibt, dass ein Anschluss nicht zum entgegengesetzten Ende aggregiert werden kann, zu senden.

8. Vorrichtung nach Anspruch 7, wobei das Paket, das angibt, dass ein Anschluss nicht aggregiert werden kann, ein Paket, das vom entgegengesetzten Ende empfangen wird, oder ein LACP-Paket, das Anschlussaggregationsinformationen führt, ist.

9. Vorrichtung nach Anspruch 7, die ferner eine Arbeitszustand-Detektionseinheit (24) umfasst, wobei:
die Arbeitszustand-Detektionseinheit dazu ausgelegt ist, zu detektieren, ob ein Anschluss arbeitet, bevor er gelöscht wird; und
die Statische-Anschlussaggregation-Verarbeitungseinheit ferner dazu ausgelegt ist, den Anschluss direkt zu löschen, wenn bestimmt wird, dass der Anschluss inaktiv ist, bevor er gelöscht wird.

## Revendications

1. Procédé d'agrégation de ports, comprenant :
lors de la création d'un groupe d'agrégation de liaisons, LAG, statique, s'il est déterminé qu'un port reçoit un paquet d'agrégation depuis une extrémité opposée, ce qui indique que le LAG statique est créé à l'extrémité opposée, le réglage de l'état du port conformément au protocole de commande d'agrégation de liaisons, LACP (305) ; s'il est déterminé qu'aucun port ne reçoit de paquet d'agrégation depuis l'extrémité opposée, ce qui indique qu'aucun LAG statique n'est créé à l'extrémité opposée, le maintien de l'état du port acheminant les services (304).

2. Procédé selon la revendication 1, dans lequel le paquet d'agrégation est un paquet LACP.

3. Procédé selon la revendication 1, comprenant en outre :
lors de la suppression d'un LAG statique ou d'un port en faisant partie, l'envoi, par un port, d'un paquet indiquant que le port ne peut pas être agrégé à l'extrémité opposée avant d'être supprimé (403, 503) ; et
le réglage d'un port qui reçoit le paquet indiquant que le port ne peut pas être agrégé à l'extrémité opposée comme étant incapable d'acheminer des services.

4. Procédé selon la revendication 3, dans lequel le processus d'envoi du paquet indiquant que le port ne peut pas être agrégé à l'extrémité opposée comprend : le renvoi du paquet reçu au port qui envoie le paquet à l'extrémité opposée, ou l'envoi d'un paquet LACP portant des informations d'agrégation de port à un port à l'extrémité opposée.

5. Procédé selon la revendication 3, comprenant en outre avant l'envoi du paquet indiquant que le port ne peut pas être agrégé à l'extrémité opposée : lorsqu'il est déterminé que le port est inactif avant d'être supprimé, la suppression directe du port.

6. Appareil d'agrégation de ports, comprenant :
une unité de traitement d'agrégation de ports statique (21) adaptée pour créer un groupe d'agrégation de liaisons, LAG, statique ;
une unité de détection d'état opposé (22), adaptée pour détecter si un port reçoit ou non un paquet d'agrégation depuis une extrémité opposée ; et
une unité d'établissement d'état de port (23), adaptée pour : quand il est déterminé qu'aucun port ne reçoit de paquet d'agrégation envoyé par l'extrémité opposée, ce qui indique qu'aucun LAG statique n'est créé à l'extrémité opposée, maintenir l'état du port acheminant les services ; quand il est déterminé qu'un port reçoit un paquet d'agrégation envoyé par l'extrémité opposée, ce qui indique que le LAG statique est créé à l'extrémité opposée, régler l'état du port conformément au protocole de commande d'agrégation de liaisons, LACP.

7. Appareil selon la revendication 6, dans lequel l'unité de traitement d'agrégation de ports statique est adaptée en outre pour supprimer un LAG statique ou un port en faisant partie, et l'appareil comprend en outre :
une unité d'envoi de paquet (25), adaptée pour envoyer un paquet indiquant qu'un port ne peut pas être agrégé à l'extrémité opposée.

8. Appareil selon la revendication 7, dans lequel le paquet indiquant qu'un port ne peut pas être agrégé est un paquet reçu depuis l'extrémité opposée ou un paquet LACP portant des informations d'agrégation de ports.

9. Appareil selon la revendication 7, comprenant en outre une unité de détection d'état de fonctionnement (24), dans lequel :
l'unité de détection d'état de fonctionnement est adaptée pour détecter si un port fonctionne ou non avant d'être supprimé ; et
l'unité de traitement d'agrégation de ports statique est adaptée en outre pour supprimer directement le port quand il est déterminé que le port est inactif avant d'être supprimé.
